# EUROPEAN PATENT SPECIFICATION

(11) **EP 3 339 270 B1**
(45) Date of publication and mention of the grant of the patent: **26.02.2020**
(21) Application number: 16837302.5
(22) Date of filing: 17.08.2016
(51) Int. Cl.: C04B 35/593, C04B 35/626

(54) **METHOD FOR MANUFACTURING A SILICON NITRIDE SINTERED BODY WITH HIGH THERMAL CONDUCTIVITY**
VERFAHREN ZUR HERSTELLUNG EINER SILICIUMNITRIDSINTERKÖRPER MIT HOHER WÄRMELEITFÄHIGKEIT
PROCÉDÉ POUR FABRIQUER UN CORPS FRITTÉ DE NITRURE DE SILICIUM PRÉSENTANT UNE CONDUCTIVITÉ THERMIQUE ÉLEVÉE

(30) Priority: 17.08.2015 KR 20150115551
(43) Date of publication of application: 27.06.2018
(73) Proprietor: Korea Advanced Institute of Science and Technology, Daejeon 34141 (KR); KCC Corporation, Seoul 06608 (KR)
(72) Inventor: KIM, Do Kyung, Daejeon 34141 (KR); LEE, Hyun Min, Daejeon 34141 (KR); SEOG, In-Sig, Yongin-si Gyeonggi-do 16891 (KR); LEE, Eun Bok, Seoul 06680 (KR)
(74) Representative: Cabinet Laurent & Charras
(86) International application number: PCT/KR2016/009021
(87) International publication number: WO 2017/030360

(56) References cited:
- CN-A- 101 215 174
- CN-B- 101 100 388
- JP-A- 2002 128 569
- JP-A- 2005 330 178
- JP-A- 2007 197 229
- KR-A- 20070 103 330
- KR-A- 20070 103 330
- J JIANG ET AL: "Sintering of silicon nitride ceramics with magnesium silicon nitride and yttrium oxide as sintering aids", IOP CONFERENCE SERIES: MATERIALS SCIENCE AND ENGINEERING, vol. 18, no. 20, 21 September 2011 (2011-09-21), page 202017, XP055488212, DOI: 10.1088/1757-899X/18/20/202017

## Description

### [Technical Field]

The present invention relates to a method for manufacturing a silicon nitride sintered body with high thermal conductivity.

### [Background Art]

As materials for a ceramic substrate, aluminum oxide (Al₂O₃), aluminum nitride (AlN), silicon carbide (SiC), silicon nitride (Si₃N₄), and the like have been commonly used. Aluminum oxide (Al₂O₃) has been mainly produced industrially due to its low production costs, but its low thermal conductivity and mechanical properties make it unsuitable for use in highly-integrated and high-performance circuits that have been recently developed. Also, aluminum nitride (AlN), which is an insulator having high thermal conductivity, has been widely used as a heat dissipation plate or a substrate for a highly integrated semiconductor device, but has a problem of a short lifespan due to degradation of thermal stability and mechanical properties.

Research is being actively conducted on a method of improving thermal conductivity of silicon nitride (Si₃N₄) having excellent mechanical properties. Silicon nitride is a ceramic which is difficult to sinter and has been commonly used in combination with alumina (Al₂O₃), zirconia (ZrO₂), or yttria (Y₂O₃) as a sintering aid to manufacture a high-density sintered body as disclosed in Japanese Unexamined Patent Application Publication No. 2005-225744.

In Japanese Laid-Open Patent No. 3476504, the use of a rare earth metal oxide as a sintering aid is disclosed.

However, when a common sintering aid is used as described above, a large amount of a secondary phase remains or the content of oxygen in a material is high, and thus thermal conductivity may be decreased due to defects caused by the high oxygen content.

J Jinag et. al.:" Sintering of silicon nitride ceramics with magnesium silicon nitride and yttrium oxide as sintering aids", IOP Conference Series: Materials Science and Engineering, Vol. 18, no. 20, 21-09-2011, discloses a method for producing a silicon nitride sintered body using MgSiN₂ and Y₂O₃ as sintering aid.

### [Disclosure]

### [Technical Problem]

It is an aspect of the present invention to provide a method for manufacturing a silicon nitride sintered body manufactured by using a non-oxide-based sintering aid capable of minimizing the concentration of oxygen introduced into a sintered body.

### [Technical Solution]

In order to accomplish the above objectives, according to an embodiment of the present invention, there is provided a method for manufacturing a silicon nitride sintered body with high thermal conductivity, which comprises the steps of: obtaining a slurry by mixing a silicon nitride powder and a non-oxide-based sintering aid; obtaining a mixed powder by drying the slurry; forming a compact by pressurizing the mixed powder; and sintering the compact, wherein the non-oxide-based sintering aid comprises a rare earth fluoride and a magnesium silicide-based compound.

The silicon nitride powder may be thermally pretreated at 1,400 to 1,600 °C under a nitrogen or argon atmosphere for 1 to 15 hours to reduce defects present in the powder.

The thermally pretreated silicon nitride powder may have oxygen and carbon contents of less than 1 wt% and an average particle diameter of 0.5 to 0.8 µm.

The non-oxide-based sintering aid is a rare earth fluoride which may be volatilized when being sintered, and preferably is one or more selected from the group consisting of YF₃, YbF₃, LaF₃, NdF₃, GdF₃ and ErF₃.

The non-oxide-based sintering aid is a magnesium silicide-based compound which may be volatilized when being sintered, and preferably is one or more selected from the group consisting of MgSiN₂ and Mg₂Si.

The non-oxide-based sintering aid may be included at a content of 0.1 to 10 wt%, preferably 0.5 to 5 wt% based on a total weight of the silicon nitride powder and the non-oxide-based sintering aid.

The step of forming the compact may be performed through cold isostatic pressing under a pressure condition of 100 to 400 MPa.

The step of sintering the compact may be performed by applying a pressure of 10 to 50 MPa under a nitrogen atmosphere at 1,700 to 1,800 °C for 1 to 20 hours.

The method according to the present invention may further comprise the step of thermally post-treating the sintered body at 1,800 to 1,850 °C for 3 to 10 hours for purification.

In addition, according to another embodiment not according to the invention, there is provided a silicon nitride sintered body with high thermal conductivity which has a bending strength of 660 to 870 MPa and a thermal conductivity of 70 W/mK or more.

### [Advantageous Effects]

The silicon nitride (Si₃N₄) sintered body has a high mechanical strength of about 660 to 870 MPa and a high thermal conductivity of 70 W/mK or more.

The silicon nitride sintered body with high thermal conductivity has excellent thermal and mechanical properties as well as high thermal conductivity, and thus can be used for various purposes such as materials for a PCB substrate, heat dissipation plates, mechanical components and the like.

### [Description of Drawings]

FIG. 1 is a flowchart of a process of manufacturing a silicon nitride sintered body with high thermal conductivity according to the present invention.
FIG. 2 shows reference images for describing Experimental Example 1 of the present invention.
FIG. 3 shows reference images for describing Experimental Example 3 of the present invention.
FIG. 4 shows reference images for describing Experimental Example 5 of the present invention.
FIG. 5 shows reference images for describing Experimental Example 6 of the present invention.

### [Mode for the Invention]

Hereinafter, exemplary embodiments of the present invention will be described with reference to the accompanying drawings. Embodiments disclosed in the present invention are intended to illustrate. Since the illustrated drawings magnify only essential principal elements and omit auxiliary elements for the purpose of clarity of the present invention, the present invention should not be interpreted only based on the drawings.

In the present invention, in order to obtain a silicon nitride sintered body with high thermal conductivity, a non-oxide-based sintering aid capable of minimizing the concentration (content) of oxygen in a sintered body is used to manufacture the sintered body.

In addition, in order to obtain a silicon nitride sintered body with high thermal conductivity, a silicon nitride ingredient powder in which defects present therein are effectively controlled is used to manufacture the sintered body.

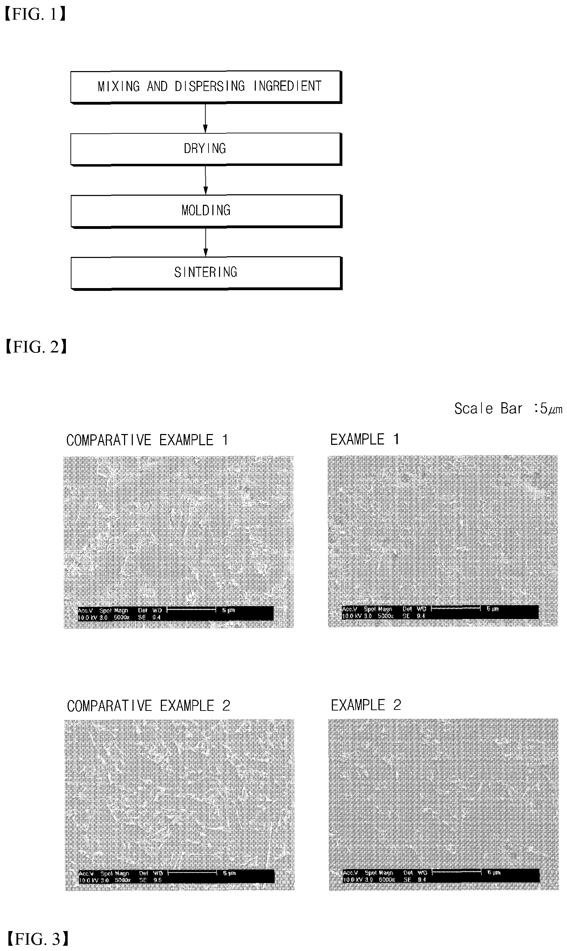

FIG. 1 is a flowchart of a manufacturing process according to the present invention. A method for manufacturing a silicon nitride sintered body according to the present invention comprises the steps of: a) obtaining a slurry by mixing a silicon nitride powder and a non-oxide-based sintering aid; b) obtaining a mixed powder by drying the slurry; c) forming a compact by pressurizing the mixed powder; and d) sintering the compact, wherein the non-oxide-based sintering aid comprises a rare earth fluoride and a magnesium silicide-based compound.

As the silicon nitride ingredient powder, a commercially available powder may be used as is or a commercially available powder may be thermally pretreated at 1,400 to 1,600 °C under a nitrogen or argon atmosphere for 1 to 15 hours for use. In the present invention, the silicon nitride powder may be thermally pretreated to reduce defects present in the silicon nitride powder, and a sintered body may be manufactured using the silicon nitride powder to obtain a sintered body with high thermal conductivity. An oxygen content of a silicon nitride powder which is not thermally pretreated is 1.27 wt%, and may be controlled to less than 1 wt% by thermally treating the silicon nitride power. When an oxygen content is controlled to less than 1 wt% as described above, a silicon vacancy in the silicon nitride powder is minimized, and thus thermal conductivity of a sintered body may be increased. In this case, a carbon content of the thermally pretreated silicon nitride powder may be less than 1 wt%. Also, such a silicon nitride powder may have an average particle diameter of 0.5 to 0.8 µm.

The non-oxide-based sintering aid is used to minimize the concentration of oxygen in a sintered body. That is, in the present invention, a rare earth fluoride and a magnesium silicide-based compound are used as non-oxide-based sintering aids instead of a rare earth oxide or a magnesium oxide conventionally used in the manufacture of a silicon nitride sintered body.

The rare earth fluoride may be one or more selected from the group consisting of YF₃, YbF₃, LaF₃, NdF₃, GdF₃ and ErF₃, and the magnesium silicide-based compound may be one or more selected from the group consisting of MgSiN₂ and Mg₂Si. The rare earth fluoride and the magnesium silicide-based compound have high volatility, and thus may minimize the formation of a secondary phase when being sintered. The presence of the secondary phase may cause phonon scattering which results in the degradation of thermal conductivity. In the present invention, the formation of a secondary phase may be minimized to reduce phonon scattering which results in the degradation of thermal conductivity, and thus a sintered body with high thermal conductivity may be obtained.

When the silicon nitride powder and the non-oxide-based sintering aid are mixed, the silicon nitride powder may be included at 80 to 99.8 wt%, preferably 90 to 99 wt%, and the non-oxide-based sintering aid may be included at 0.1 to 10 wt%, preferably 0.5 to 5 wt% based on a total weight of the silicon nitride powder and the non-oxide-based sintering aid.

When the non-oxide-based sintering aid is included at less than 0.1 wt%, a sintering process may not be smoothly performed. On the other hand, when the non-oxide-based sintering aid is included at greater than 10 wt%, a liquid amount is increased, and thus mechanical strength, thermal conductivity and the like of a sintered body may be degraded.

The silicon nitride powder and the non-oxide-based sintering aid are mixed with and dispersed in an organic solvent (e.g., isopropanol) to prepare a slurry. The mixing and dispersing process may be performed at a speed of 125 to 350 rpm at room temperature for 2 to 48 hours.

While being stirred with a magnetic bar to prevent the slurry from precipitating, the slurry is primarily dried at 70 to 150 °C for 0.5 to 2 hours and secondarily dried in a vacuum oven at 80 to 150 °C for 2 to 24 hours to prepare a mixed powder.

Then, the mixed powder is pressurized to form a compact. The compact may be formed under a pressure condition of 100 to 400 MPa. Also, a pressurizing method such as cold isostatic pressing may be used to form a compact having a constant density.

Afterward, the compacts are stacked in layers in a graphite sleeve, the graphite sleeve containing the compacts is placed in a sintering reactor (e.g., graphite furnace), and then the compacts are sintered to manufacture sintered bodies. Through such a sintering process, a pore is minimized and thus a sintered body with a dense structure may be obtained.

The sintering process of the compact may be performed through hot-press sintering, pressureless sintering, gas pressure sintering, or the like. The hot-press sintering may be performed under a pressure condition of 10 to 50 MPa and a nitrogen atmosphere at 1,700 to 1,800 °C for 1 to 20 hours. A compact may be prevented from being oxidized in the sintering process by maintaining a nitrogen atmosphere during the hot-press sintering.

The sintered body thus manufactured may be further subjected to a thermally post-treating process at 1,800 to 1,850 °C for 3 to 10 hours. The thermally post-treating process is a purification process for removing defects (e.g., Yb-precipitates, dislocations, or the like) present in a grain or at a grain boundary in the sintered body. Through the thermally post-treating process, the growth of a grain in the sintered body may be suppressed or a formed secondary phase may be removed. Accordingly, phonon scattering which results in the degradation of thermal conductivity is decreased, and thus thermal conductivity of the sintered body may be improved.

### [Example 1]

Ingredient powders consisting of compositions listed in Table 1 below were added to 100 ml of an isopropanol solvent, and then the mixture was subjected to ball milling using a silicon nitride ball at room temperature at 300 rpm for 24 hours to prepare a slurry.

While being stirred with a magnetic bar to prevent the slurry thus prepared from precipitating, the slurry was primarily dried at 120 °C for 1.5 hours and secondarily dried in a vacuum oven at 60 °C for 1 hour to prepare a mixed powder.

2.0 g of the mixed powder thus prepared was taken, added to a mold, and then subjected to cold isostatic pressing under a pressure condition of 200 MPa to form a discoid compact having a diameter of 20 mm and a thickness of 2.5 mm.

The compacts thus formed were stacked in layers in a graphite sleeve, and graphite spacers were introduced between the compacts to prevent the compacts from being brought into contact with one another. Afterward, the graphite sleeve containing the compacts was placed in a graphite furnace, and the compacts were sintered under a nitrogen atmosphere at 1,800 °C for 2 hours and uniaxially pressurized at a pressure of 25 MPa to manufacture a sintered body.

### [Example 2]

A sintered body was manufactured in the same manner as Example 1 except that ingredient powders consisting of compositions listed in Table 1 below were used.

### [Comparative Example 1]

A sintered body was manufactured in the same manner as Example 1 except that ingredient powders consisting of compositions listed in Table 1 below were used.

### [Comparative Example 2]

A sintered body was manufactured in the same manner as Example 1 except that ingredient powders consisting of compositions listed in Table 1 below were used.

**[Table 1]**

| Ingredient powder | Example 1 | Example 2 | Comparative Example 1 | Comparative Example 2 |
|---|---|---|---|---|
| Si₃N₄ powder (oxygen content: 1.27 wt% and average particle diameter: 0.5 to 0.8 µm) | 9.2 g (92 wt%) | 9.2 g (92 wt%) | 9.2 g (92 wt%) | 9.2 g (92 wt%) |
| MgSiN₂ powder (average particle diameter: 3.0 µm) | 0.3 g (3 wt%) | 0.3 g (3 wt%) | - | - |
| MgO powder (average particle diameter: 1.0 µm) | - | - | 0.3 g (3 wt%) | 0.3 g (3 wt%) |
| YF₃ | 0.5 g (5 wt%) | - | - | - |
| YbF₃ | - | 0.5 g (5 wt%) | - | - |
| Y₂O₃ | - | - | 0.5 g (5 wt%) | - |
| Yb₂O₃ | - | - | - | 0.5 g (5 wt%) |

### [Experimental Example 1]

The surface of each sintered body according to Examples 1 and 2 and Comparative Examples 1 and 2 was polished and plasma-etched. Afterward, the microstructure of the sintered body was identified using an electron microscope, the result of which is shown in FIG. 2.

Referring to FIG. 2, it can be confirmed that the sintered bodies according to Examples 1 and 2 of the present invention exhibited a smaller amount of a secondary phase part (white part) compared to the sintered bodies according to Comparative Examples 1 and 2.

### [Experimental Example 2]

Thermal conductivity of each sintered body according to Examples 1 and 2 and Comparative Examples 1 and 2 was measured through a laser flash method, the result of which is shown in Table 2 below.

**[Table 2]**

| Classification | Example 1 | Example 2 | Comparative Example 1 | Comparative Example 2 |
|---|---|---|---|---|
| Thermal conductivity (k) | 58.8 | 62.9 | 55.1 | 53.6 |

Referring to Table 2, it can be confirmed that the sintered bodies according to Examples 1 and 2 of the present invention exhibited higher thermal conductivities compared to the sintered bodies according to Comparative Examples 1 and 2. This is considered to be due to the fact that, as the sintered bodies according to the present invention have a smaller amount of a secondary phase part, phonon scattering caused by the secondary phase is reduced, and thus thermal conductivity is improved.

### [Example 3]

Ingredient powders consisting of compositions listed in Table 3 below were added to 100 ml of an isopropanol solvent, and then the mixture was subjected to ball milling using a silicon nitride ball at room temperature at 300 rpm for 24 hours to prepare a slurry.

While being stirred with a magnetic bar to prevent the slurry thus prepared from precipitating, the slurry was primarily dried at 120 °C for 1.5 hours and secondarily dried in a vacuum oven at 60 °C for 1 hour to prepare a mixed powder.

2.0 g of the mixed powder thus prepared was taken, added to a mold, and then subjected to cold isostatic pressing under a pressure condition of 200 MPa to form a discoid compact having a diameter of 20 mm and a thickness of 2.5 mm.

The compacts thus formed were stacked in layers in a graphite sleeve, and graphite spacers were introduced between the compacts to prevent the compacts from being brought into contact with one another. Afterward, the graphite sleeve containing the compacts was placed in a graphite furnace, and the compacts were sintered under a nitrogen atmosphere at 1,750 °C for 2 hours and uniaxially pressurized at a pressure of 25 MPa to manufacture a sintered body.

Then, the sintered body thus manufactured was thermally post-treated at 1,850 °C for 4 hours.

### [Example 4]

A sintered body was manufactured in the same manner as Example 3 except that ingredient powders consisting of compositions listed in Table 3 below were used.

### [Comparative Example 3]

A sintered body was manufactured in the same manner as Example 3 except that ingredient powders consisting of compositions listed in Table 3 below were used.

### [Comparative Example 4]

A sintered body was manufactured in the same manner as Example 3 except that ingredient powders consisting of compositions listed in Table 3 below were used.

**[Table 3]**

| Ingredient powder | Example 3 | Example 4 | Comparative Example 3 | Comparative Example 4 |
|---|---|---|---|---|
| Si₃N₄ powder (oxygen content: 1.27 wt% and average particle diameter: 0.5 to 0.8 µm) | 9.5 g (95 wt%) | 9.5 g (95 wt%) | 9.5 g (95 wt%) | 9.5 g (95 wt%) |
| MgSiN₂ powder (average particle diameter: 3.0 µm) | 0.2 g (2 wt%) | 0.2 g (2 wt%) | 0.2 g (2 wt%) | 0.2 g (2 wt%) |
| YF₃ | 0.3 g (3 wt%) | - | - | - |
| YbF₃ | - | 0.3 g (3 wt%) | - | - |
| Y₂O₃ | - | - | 0.3 g (3 wt%) | - |
| Yb₂O₃ | - | - | - | 0.3 g (3 wt%) |

### [Experimental Example 3]

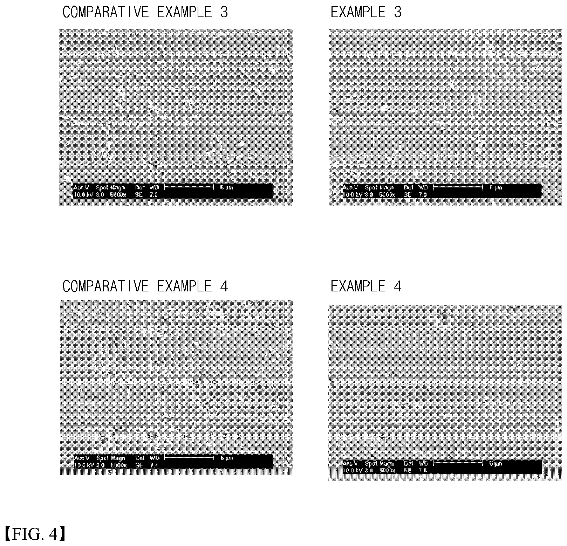

The surface of each sintered body according to Examples 3 and 4 and Comparative Examples 3 and 4 was polished and plasma-etched. Afterward, the microstructure of the sintered body was identified using an electron microscope, the result of which is shown in FIG. 3.

Referring to FIG. 3, it can be confirmed that the sintered bodies according to Examples 3 and 4 of the present invention exhibited a smaller amount of a secondary phase part (white part) compared to the sintered bodies according to Comparative Examples 3 and 4.

### [Experimental Example 4]

Thermal conductivity of each sintered body according to Examples 3 and 4 and Comparative Examples 3 and 4 was measured through a laser flash method, the result of which is shown in Table 4 below.

**[Table 4]**

| Classification | Example 3 | Example 4 | Comparative Example 3 | Comparative Example 4 |
|---|---|---|---|---|
| Thermal conductivity (k) | 79.8 | 84.3 | 71.8 | 75.8 |

Referring to Table 4, it can be confirmed that the sintered bodies according to Examples 3 and 4 of the present invention exhibited higher thermal conductivities compared to the sintered bodies according to Comparative Examples 3 and 4. This is considered to be due to the fact that, as a secondary phase formed during a sintering process is removed through thermal post-treatment, phonon scattering caused by the secondary phase is reduced, and thus thermal conductivity is improved.

### [Example 5]

Ingredient powders consisting of compositions listed in Table 5 below were added to 100 ml of an isopropanol solvent, and then the mixture was subjected to ball milling using a silicon nitride ball at room temperature at 300 rpm for 24 hours to prepare a slurry.

While being stirred with a magnetic bar to prevent the slurry thus prepared from precipitating, the slurry was primarily dried at 120 °C for 1.5 hours and secondarily dried in a vacuum oven at 60 °C for 1 hour to prepare a mixed powder.

2.0 g of the mixed powder thus prepared was taken, added to a mold, and then subjected to cold isostatic pressing under a pressure condition of 200 MPa to form a discoid compact having a diameter of 20 mm and a thickness of 2.5 mm.

The compacts thus formed were stacked in layers in a graphite sleeve, and graphite spacers were introduced between the compacts to prevent the compacts from being brought into contact with one another. Afterward, the graphite sleeve containing the compacts was placed in a graphite furnace, and the compacts were sintered under a nitrogen atmosphere at 1,750 °C for 2 hours and uniaxially pressurized at a pressure of 25 MPa to manufacture a sintered body.

### [Example 6]

A sintered body was manufactured in the same manner as Example 5 except that ingredient powders consisting of compositions listed in Table 5 below were used, wherein a Si₃N₄ powder was thermally pretreated under a nitrogen atmosphere at 1,500 °C for 4 hours.

### [Example 7]

A sintered body was manufactured in the same manner as Example 5 except that ingredient powders consisting of compositions listed in Table 5 below were used, wherein a Si₃N₄ powder was thermally pretreated under a nitrogen atmosphere at 1,500 °C for 10 hours.

**[Table 5]**

| Ingredient powder | Example 5 | Example 6 | Example 7 |
|---|---|---|---|
| Si₃N₄ powder (average particle diameter: 0.5 to 0.8 µm) | 9.5 g (95 wt%) | - | - |
| Si₃N₄ powder thermally pretreated for 4 hours (average particle diameter: 0.5 to 0.8 µm) | - | 9.5 g (95 wt%) | - |
| Si₃N₄ powder thermally pretreated for 10 hours (average particle diameter: 0.5 to 0.8 µm) | - | - | 9.5 g (95 wt%) |
| MgSiN₂ powder (average particle diameter: 3.0 µm) | 0.2 g (2 wt%) | 0.2 g (2 wt%) | 0.2 g (2 wt%) |
| YbF₃ | 0.3 g (3 wt%) | 0.3 g (3 wt%) | 0.3 g (3 wt%) |

### [Experimental Example 5]

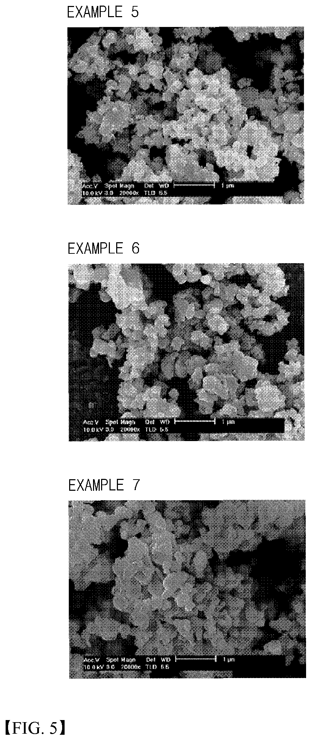

The contents of oxygen and carbon contained in each Si₃N₄ powder used in Examples 5, 6, and 7 were measured through a hot-gas extraction method using inorganic CS/ONH analysis (CS800/ONH-2000, Eltra, Haan, Germany), the result of which is shown in Table 6 below. Also, the microstructure of each Si₃N₄ powder was identified using an electron microscope, the result of which is shown in FIG. 4.

**[Table 6]**

| Classification | Oxygen content (%) | Carbon content (%) |
|---|---|---|
| Si₃N₄ powder in Example 5 | 1.273 | 0.116 |
| Si₃N₄ powder in Example 6 | 0.979 | 0.106 |
| Si₃N₄ powder in Example 7 | 0.969 | 0.100 |

Referring to Table 6, it can be confirmed that, as a Si₃N₄ powder was thermally pretreated, the contents of oxygen and carbon which are impurities were decreased.

In addition, referring to FIG. 4, it can be confirmed that a grain did not grow even when a Si₃N₄ powder was thermally pretreated for 10 hours to remove oxygen and carbon which are impurities.

### [Example 8]

The sintered body according to Example 5 was thermally post-treated at 1,830 °C for 3 hours.

### [Example 9]

The sintered body according to Example 5 was thermally post-treated at 1,830 °C for 7 hours.

### [Example 10]

The sintered body according to Example 5 was thermally post-treated at 1,830 °C for 10 hours.

### [Example 11]

The sintered body according to Example 6 was thermally post-treated at 1,830 °C for 3 hours.

### [Example 12]

The sintered body according to Example 6 was thermally post-treated at 1,830 °C for 7 hours.

### [Example 13]

The sintered body according to Example 6 was thermally post-treated at 1,830 °C for 10 hours.

### [Example 14]

The sintered body according to Example 7 was thermally post-treated at 1,830 °C for 3 hours.

### [Example 15]

The sintered body according to Example 7 was thermally post-treated at 1,830 °C for 7 hours.

### [Example 16]

The sintered body according to Example 7 was thermally post-treated at 1,830 °C for 10 hours.

### [Experimental Example 6]

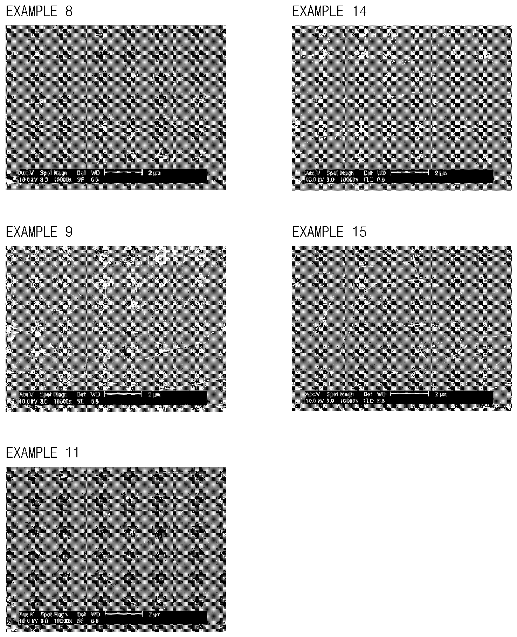

Properties of each sintered body according to Examples 8 to 16 were evaluated, the results of which are shown in Table 7 below. Also, the microstructure of each sintered body was identified using an electron microscope, the result of which is shown in FIG. 5. Here, bending strength was measured using a sample with a size of 3.0×4.0×35 mm through a three-point bending test (crosshead speed: 0.5 mm/min).

**[Table 7]**

| Classification | Thermal post-treatment time | Density (g/cm³) | Thermal conductivity (k) | Bending strength (MPa) |
|---|---|---|---|---|
| Example 8 | 3 hours | 3.22 | 75.5 | 916.1 |
| Example 9 | 7 hours | 3.21 | 84.4 | 862.1 |
| Example 10 | 10 hours | 3.22 | 96.9 | 792.1 |
| Example 11 | 3 hours | 3.21 | 79.7 | 890.8 |
| Example 12 | 7 hours | - | - | - |
| Example 13 | 10 hours | - | - | - |
| Example 14 | 3 hours | 3.19 | 101.2 | 871.4 |
| Example 15 | 7 hours | 3.2 | 109.9 | 727.8 |
| Example 16 | 10 hours | 3.21 | 120.1 | 699.6 |

Referring to Table 7, it can be confirmed that thermal conductivity of a sintered body was increased to a maximum of 120 W/mK by using a thermally pretreated Si₃N₄ powder and thermally post-treating a sintered body as in the present invention. Also, it can be confirmed that a sintered body having a high bending strength ranging from 660 to 870 MPa was manufactured according to the manufacturing method of the present invention.

## Claims

1. A method for manufacturing a silicon nitride sintered body with high thermal conductivity, comprising the steps of:
a) obtaining a slurry by mixing a silicon nitride powder and a non-oxide-based sintering aid;
b) obtaining a mixed powder by drying the slurry;
c) forming a compact by pressurizing the mixed powder; and
d) sintering the compact,
wherein the non-oxide-based sintering aid comprises a rare earth fluoride and a magnesium silicide-based compound.

2. The method of claim 1, wherein the silicon nitride powder is thermally pretreated at 1,400 to 1,600 °C under a nitrogen or argon atmosphere for 1 to 15 hours.

3. The method of claim 2, wherein the thermally pretreated silicon nitride powder has an oxygen content of less than 1 wt% and an average particle diameter of 0.5 to 0.8 mm.

4. The method of claim 2, wherein the thermally pretreated silicon nitride powder has a carbon content of less than 1 wt%.

5. The method of claim 1, wherein the rare earth fluoride is one or more selected from the group consisting of YF₃, YbF₃, LaF₃, NdF₃, GdF₃ and ErF₃.

6. The method of claim 1, wherein the magnesium silicide-based compound is one or more selected from the group consisting of MgSiN₂ and Mg₂Si.

7. The method of claim 1, wherein the non-oxide-based sintering aid is included at a content of 0.1 to 10 wt% based on a total weight of the silicon nitride powder and the non-oxide-based sintering aid.

8. The method of claim 1, wherein the step of forming the compact is performed by cold isostatic pressing under a pressure condition of 100 to 400 MPa.

9. The method of claim 1, wherein the step of sintering the compact is performed by applying a pressure of 10 to 50 MPa under a nitrogen atmosphere at 1,700 to 1,800 °C for 1 to 20 hours.

10. The method of claim 1, further comprising the step of e) thermally post-treating the sintered body at 1,800 to 1,850 °C for 3 to 10 hours.

## Patentansprüche

1. Verfahren zur Herstellung eines Siliciumnitridsinterkörpers mit hoher Wärmeleitfähigkeit, das die folgenden Schritte umfasst:
a) Herstellen einer Aufschlämmung durch Mischen eines Siliciumnitridpulvers und eines Sinterhilfsmittels auf nicht- oxidischer Basis;
b) Herstellen eines gemischten Pulvers durch Trocknen der Aufschlämmung;
c) Formen eines Presslings durch Unterdrucksetzen des gemischten Pulvers; und
d) Sintern des Presslings,
wobei das Sinterhilfsmittel auf nicht- oxidischer Basis ein Fluorid Seltener Erden und eine Verbindung auf Magnesiumsilicidbasis enthält.

2. Das Verfahren nach Anspruch 1, wobei das Siliciumnitridpulver bei 1.400 bis 1.600°C in einer Nitrogen- oder Argonatmosphäre 1 bis 15 Stunden lang thermisch vorbehandelt wird.

3. Das Verfahren nach Anspruch 2, wobei das thermisch vorbehandelte Siliciumnitridpulver einen Sauerstoffgehalt von unter 1 Gew.-% und einen durchschnittlichen Teilchendurchmesser von 0,5 bis 0,8 mm hat.

4. Das Verfahren nach Anspruch 2, wobei das thermisch vorbehandelte Siliciumnitridpulver einen Kohlenstoffgehalt von unter 1 Gew.-% hat.

5. Das Verfahren nach Anspruch 1, wobei das es sich bei dem Fluorid Seltener Erden um eines oder mehrere handelt, die ausgewählt werden aus der Gruppe bestehend aus YF₃, YbF₃, LaF₃, NdF₃, GdF₃ und ErF₃.

6. Das Verfahren nach Anspruch 1, wobei die Verbindung auf Magnesiumsilicidbasis ausgewählt wird aus der Gruppe bestehend aus MgSiN₂ und Mg₂Si.

7. Das Verfahren nach Anspruch 1, wobei das Sinterhilfsmittel auf nichtoxidischer Basis in einer Menge von 0,1 bis 10 Gew.-%, auf Basis eines Gesamtgewichtes des Siliciumnitridpulvers und des Sinterhilfsmittels auf nichtoxidischer Basis enthalten ist.

8. Das Verfahren nach Anspruch 1, wobei der Schritt der Herstellung des Presslings durch kaltes isostatisches Pressen unter einem Druck von 100 bis 400 MPa durchgeführt wird.

9. Das Verfahren nach Anspruch 1, wobei der Schritt des Sinterns des Presslings durch Anlegen eines Drucks von 10 bis 50 MPa, in einer Nitrogenatmosphäre, bei 1.700 bis 1.800 °C, 1 bis 20 Stunden lang, durchgeführt wird.

10. Das Verfahren nach Anspruch 1, das weiterhin einen Schritt e) der thermischen Nachbehandlung des Interkörpers bei 1.800 bis 1.850°C zwischen 3 und 10 Stunden enthält.

## Revendications

1. Méthode de fabrication d'un corps fritté de nitrure de silicium présentant une conductivité thermique élevée, comprenant les étapes consistant à :
a) obtenir une pâte par mélange d'une poudre de nitrure de silicium et d'un auxiliaire de frittage à base non oxyde ;
b) obtenir une poudre mixte en séchant la pâte ;
c) former un comprimé par mise sous pression de la poudre mixte ; et
d) fritter le comprimé,
dans laquelle l'adjuvant de frittage à base non oxyde comprend un fluorure de terre rare et un composé à base de siliciure de magnésium.

2. Méthode selon la revendication 1, dans laquelle la poudre de nitrure de silicium est prétraitée thermiquement entre 1 400 et 1 600°C sous une atmosphère d'azote ou d'argon pendant 1 à 15 heures.

3. Méthode selon la revendication 2, dans laquelle la poudre de nitrure de silicium prétraitée thermiquement a une teneur en oxygène inférieure à 1 % en poids et un diamètre de particule moyen de 0,5 à 0,8 mm.

4. Méthode selon la revendication 2, dans laquelle la poudre de nitrure de silicium prétraitée thermiquement a une teneur en carbone inférieure à 1 % en poids.

5. Méthode selon la revendication 1, dans laquelle le fluorure de terre rare est un ou plusieurs sélectionnés dans le groupe constitué de YF₃, YbF₃, LaF₃, NdF₃, GdF₃ et ErF₃.

6. Méthode selon la revendication 1, dans laquelle le composé à base de siliciure de magnésium est un ou plusieurs sélectionnés dans le groupe constitué de MgSiN₂ et Mg₂Si.

7. Méthode selon la revendication 1, dans laquelle l'auxiliaire de frittage à base non oxyde est inclus à une teneur de 0,1 à 10 % en poids sur la base d'un poids total de la poudre de nitrure de silicium et de l'auxiliaire de frittage à base non oxyde.

8. Méthode selon la revendication 1, dans laquelle l'étape de formation du comprimé est effectuée par pressage isostatique à froid dans une condition de pression de 100 à 400 MPa.

9. Méthode selon la revendication 1, dans laquelle l'étape de frittage du comprimé est effectuée en appliquant une pression de 10 à 50 MPa sous une atmosphère d'azote entre 1 700 et 1 800°C pendant 1 à 20 heures.

10. Méthode selon la revendication 1, comprenant en outre l'étape de e) post-traitement thermique du corps fritté entre 1 800 et 1 850°C pendant 3 à 10 heures.
